# EUROPÄISCHE PATENTSCHRIFT

(11) **EP 1 555 147 B1**
(45) Veröffentlichungstag und Bekanntmachung des Hinweises auf die Patenterteilung: **31.12.2008**
(21) Anmeldenummer: 04290087.8
(22) Anmeldetag: 13.01.2004
(51) Int. Cl.: B60H 1/00

(54) **Klimatisierungsvorrichtung für ein Kraftfahrzeug**
Air conditioning device for a vehicle
Dispositif de climatisation pour véhicule

(43) Veröffentlichungstag der Anmeldung: 20.07.2005
(73) Patentinhaber: Behr France Rouffach SAS, 68250 Rouffach (FR)
(72) Erfinder: Peter, Vincent, 68190 Ensisheim (FR)
(74) Vertreter: Grauel, Andreas

(56) Entgegenhaltungen:
- EP-A- 1 110 769
- DE-A- 4 015 376
- FR-A- 2 717 745
- US-A- 5 816 064
- US-A1- 2003 060 154
- US-B1- 6 415 857
- US-B1- 6 457 767
- PATENT ABSTRACTS OF JAPAN Bd. 1998, Nr. 06, 30. April 1998 (1998-04-30) -& JP 10 035251 A (DENSO CORP), 10. Februar 1998 (1998-02-10)

## Beschreibung

Die vorliegende Erfindung betrifft eine Klimatisierungsvorrichtung für ein Kraftfahrzeug mit den Merkmalen des Oberbegriffs des Anspruchs 1. Die Erfindung betrifft weiterhin ein Fahrzeug gemäß der Ansprüche 5-8.

Eine Klimaanlage eines Kraftfahrzeuges weist üblicherweise mehrere in den Fahrzeuginnenraum mündende Ausströmöffnungen auf, die wahlweise mit gekühlter oder erwärmter Luft beaufschlagt werden können. Typischerweise sind wenigstens jeweils zwei Ausströmöffnungen im Fußraum, im Bereich einer Mittelkonsole sowie oberhalb einer Armaturentafel vorgesehen, jeweils mindestens eine auf einer Fahrer- sowie einer Beifahrerseite. Zur Verteilung der klimatisierten Luft auf die verschiedenen Ausströmöffnungen ist diesen bei bekannten Klimaanlagen jeweils wenigstens eine Stelleinrichtung zugeordnet, mittels derer eine Durchlassöffnung variabel geöffnet oder verschlossen werden kann.

Bei modernen Fahrzeugen werden an die Klimaanlage hohe Anforderungen gestellt, da sich der Innenraum des Fahrzeugs aufgrund von oftmals sehr großen Glasflächen bei Sonneneinstrahlung stark aufheizt. Oftmals sind zudem großflächige Glasdächer vorhanden, die bis in den Fondbereich reichen können, wodurch die Aufheizung des Innenraums zusätzlich begünstigt wird. Selbst wenn die Vordersitze noch ausreichend klimatisiert werden können, kann oftmals ein ausreichender Klimatisierungskomfort für die im Fondbereich sitzenden Passagiere nicht gewährleistet werden. Herkömmliche Klimatisierungseinrichtungen sind teilweise nicht in der Lage, für eine ausreichende Klimatisierung des Fondbereichs des Fahrzeuges zu sorgen, da die entstehenden Temperaturunterschiede zwischen Frontbereich und Fondbereich nicht ausgeglichen werden können.

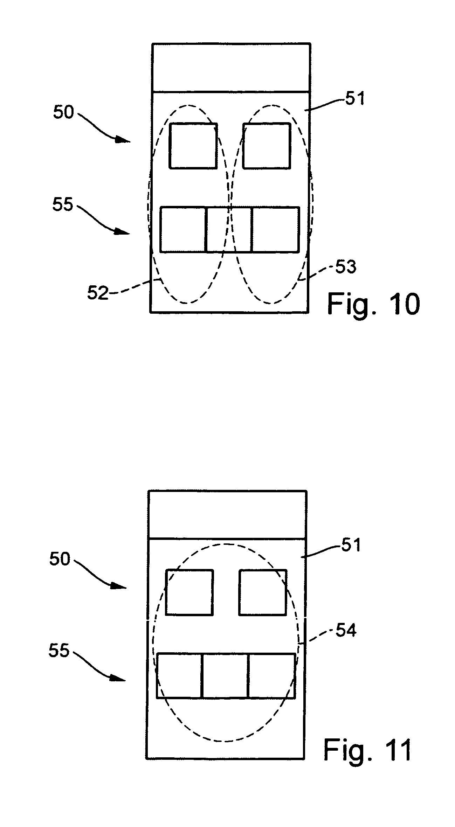

Die Figuren 10 und 11 verdeutlichen in schematischen Darstellungen bekannte Anordnungen von Fahrzeugklimaanlagen, bei denen eine Reihe von Ausströmöffnungen (nicht dargestellt) in einem vorderen Bereich 50 eines Fahrzeuginnenraums 51, bspw. im Bereich einer Armaturentafel, angeordnet sind, durch die klimatisierte Luft in den Fahrzeuginnenraum 51 gefördert werden kann. Figur 10 verdeutlicht eine Anordnung, bei der die Temperatur für eine linke Klimazone 52 und für eine rechte Klimazone 53 separat voneinander einstellbar sind, während bei der Anordnung gemäß Figur 11 der gesamte Fahrzeuginnenraum 51 eine gemeinsame Klimazone 54 bildet. Beiden gezeigten Anordnungen ist gemeinsam, dass der vordere Bereich 50 jeweils in gewünschter Weise klimatisiert werden kann, während der Fondbereich 55 unter Umständen aufgrund fehlender Ausströmöffnungen nicht in ausreichender Weise mit klimatisierter Luft versorgt werden kann.

US 6 415 857 offenbart eine Klimaanlage nach dem Oberbegriff des Anspruchs 1.

Der vorliegenden Erfindung liegt die Aufgabe zugrunde, eine Fahrzeugklimaanlage zur Innenraumtemperierung bzw. -klimatisierung zur Verfügung zu stellen, die eine ausreichende Klimatisierung eines Fahrzeugfondbereichs ermöglicht.

Diese Aufgabe wird durch die im Anspruch 1 angegebenen Merkmale gelöst. Vorteilhafte Ausgestaltungen und Weiterbildungen der Erfindung ergeben sich aus den abhängigen Ansprüchen.

Bei einer erfindungsgemäßen Klimatisierungsvorrichtung gemäß Anspruch 1 ist vorgesehen, dass in einem Bereich eines Luftführungskanals nahe einer Mischungsklappe wenigstens ein Zweigkanal angeordnet ist, durch welchen klimatisierte Luft in einen hinteren Bereich des Fahrzeuginnenraums leitbar ist. Die erfindungsgemäße Klimatisierungsvorrichtung ermöglicht eine ausreichende Klimatisierung des Fahrzeugfondbereichs bei gleichzeitig sehr kompakter Bauweise der Luftverteilungseinrichtungen. Es sind keine zusätzlichen Mischungsklappen, Verstellmotoren, Verstellmechanismen o. dgl. notwendig, wie dies bei bekannten Klimaanlagen der Fall ist. Der Luftaustritt für den wenigstens einen Zweigkanal ist vorzugsweise so platziert, dass er innerhalb der Mischungszone anliegt. Hierdurch können die Fondsitze mit kalter, warmer oder temperierter Luft versorgt werden.

Die Luftverteilung im Frontbereich des Fahrzeuginnenraums kann auf bekannte Weise erfolgen. So kann die Luftverteilung zwischen wenigstens zwei in den Kraftfahrzeuginnenraum mündenden Ausströmöffnungen mittels wenigstens einer Verteiler- oder Mischungsklappe variabel einstellbar ist.

Mittels einer oder mehreren solcher Klappen kann mit nur einem Bauteil eine variable Luftverteilung zwischen zwei oder mehr Ausströmöffnungen erreicht werden. Erste Ausströmöffnungen können bspw. in einen Fußraum des Kraftfahrzeuginnenraums münden, während zweite Ausströmöffnungen in einen oberen Bereich des Kraftfahrzeuginnenraums münden können. Die Klimatisierungsanlage kann wahlweise eine getrennte Regelung für eine rechte und eine linke Innenraumzone vorsehen, während der Fondbereich typischerweise keine getrennte Regelung für linke und rechte Seite aufweist. Ggf. können weitere Klappen vorgesehen sein, mittels derer die in den Fondbereich mündenden Ausströmöffnungen variabel verschließbar sein können.

Die Ausströmöffnungen für den Fondbereich können in den B-Säulen und/oder in den C-Säulen angeordnet sein. Wahlweise oder zusätzlich kann eine oder mehrere Ausströmöffnungen im Bodenbereich nahe eines Mitteltunnels vorgesehen sein. Mehrere Ausströmöffnungen in unterschiedlichen Höhen können eine Schichtung der Luft ermöglichen, so dass untere Ausströmöffnung vorzugsweise zur Einleitung von Warmluft und obere Ausströmöffnungen zur Einleitung von Kaltluft dienen können. Es kann weiterhin vorgesehen sein, dass der Zweigkanal und/oder die Ausströmöffnungen mittels Klappen o. dgl. variabel öffenbar bzw. verschließbar sind.

Die Erfindung wird nachfolgend in bevorzugten Ausführungsbeispielen anhand der zugehörigen Zeichnungen näher erläutert. Es zeigen die:
- Figuren 1 und 2: schematische Schnittdarstellungen einer beispielhaften Ausführungsform einer erfindungsgemäßen Klimatisierungsvorrichtung, die
- Figuren 3 bis 5: verschiedene Betriebszustände der Klimatisierungsvorrichtung, jeweils in schematischer Schnittdarstellung, die
- Figuren 6 und 7: verschiedene Varianten einer Luftverteilung in einem Fahrzeuginnenraum in schematischen Darstellungen, die
- Figuren 8 und 9: verschiedene Varianten von Ausströmöffnungen im Fondbereich des Fahrzeuginnenraums und die
- Figuren 10 und 11: schematische Darstellungen von Luftverteilungen, wie sie mit bekannten Klimatisierungsvorrichtungen realisiert werden können.

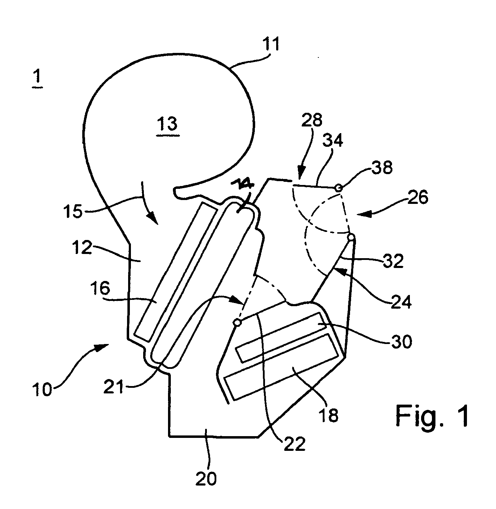

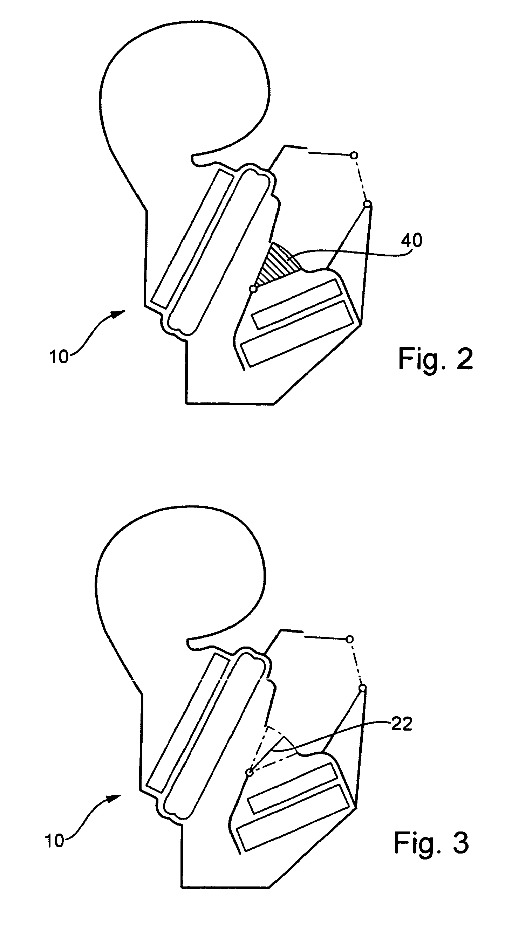

Die Figuren 1 und 2 verdeutlichen jeweils in Prinzipdarstellungen den Aufbau sowie die grundsätzliche Funktion einer erfindungsgemäßen Klimatisierungsvorrichtung 10. Ein Gehäuse 11 umfasst einen Luftführungskanal 12 und weist ein Gebläse 13 zur Erzeugung einer Luftströmung durch den Luftführungskanal 12 auf. In diesem ist stromabwärts des Gebläses 13 eine Kühleinrichtung 14 angeordnet, der ein Filter 16 vorgeschaltet sein kann. Die Kühleinrichtung 14 ist üblicherweise ein sog. Verdampfer bzw. eine Wärmetauschereinrichtung und dient zur Abkühlung der vom Gebläse 13 geförderten Luftströmung 15. Stromabwärts der Kühleinrichtung 14 befindet sich eine Heizeinrichtung 18, die in einem unteren Teilkanal 20 angeordnet ist.

Parallel zu diesem Teilkanal 20 verläuft ein zusätzlicher Bypasskanal 21, dessen Kanalquerschnitt mittels einer Mischungsklappe 22 reguliert und der mittels der Mischungsklappe 22 auch vollständig verschlossen werden kann. Die Mischungsklappe 22 dient zur Regulierung der Lufttemperatur, da bei verschlossener Klappe 22 die gesamte geförderte Luft durch den Teilkanal 20 und die Heizeinrichtung 18 strömt, während bei geöffneter Mischungsklappe 22 die Luft aufgrund des geringeren Widerstandes an der Heizeinrichtung 18 vorbei durch den Bypasskanal 21 strömt. Der Luftführungskanal 12 mündet nach der Verzweigung wieder in einem einzigen Kanal und führt im gezeigten Ausführungsbeispiel zu drei Ausströmöffnungen 24, 26, 28, die jeweils in einen Kraftfahrzeuginnenraum (nicht dargestellt) münden.

Die erste Ausströmöffnung 24 ist nach unten gerichtet und dient normalerweise zur Klimatisierung bzw. Erwärmung eines Fußraumes des Fahrzeuginnenraums.

Die zweite Ausströmöffnung 26 kann sich bspw. in einer Armaturentafel befinden und dient zur Klimatisierung bzw. Erwärmung eines mittleren Bereichs des Fahrzeuginnenraums, während die nach oben gerichtete dritte Ausströmöffnung 28 in erster Linie zur Erwärmung bzw. Belüftung einer Windschutzscheibe und/oder von Seitenscheiben des Fahrzeugs dient, bspw., um diese beschlagfrei zu halten. Die dritte Ausströmöffnung 28 weist zudem eine Defrosterfunktion auf. Typischerweise sind bei einer Klimatisierungsvorrichtung 10 zur Klimatisierung eines Fahrzeugsinnenraums die in Figur 1 dargestellten Ausströmöffnungen 24, 26 und 28 paarweise für jede Seite des Fahrzeuginnenraums vorhanden.

Die Heizeinrichtung 18 kann eine Reihe von elektrisch beheizbaren Drähten aufweisen, die von der zu erwärmenden Luft durchströmt werden. Alternativ dazu oder zusätzlich kann ein PTC-Element 30 vorgesehen sein, das im gezeigten Ausführungsbeispiel der Heizeinrichtung nachgeordnet ist und das zur schnelleren Erwärmung auf eine gewünschte Temperatur dienen kann.

Die beiden Verteilerklappen 32 und 34 sind so nah beieinander angeordnet, dass sich eine Überschneidung ihrer Schwenkbereiche ergibt. Die beiden Verteilerklappen 32 und 34 müssen aus diesem Grund in ihren Schwenkbewegungen so miteinander gekoppelt sein, dass sie nicht miteinander kollidieren. Hierbei grenzen die zweite und die dritte Ausströmöffnung 26 und 28 in einer Kante aneinander. In diesem Eckbereich befindet sich eine Schwenkachse 38 der zweiten Verteilerklappe 34, die je nach ihrer Stellung die zweite Ausströmöffnung 26 oder die dritte Ausströmöffnung 28 verschließen kann.

Die Ausgestaltung der vorderen Ausströmöffnungen ist jedoch nur beispielhaft zu verstehen und kann auch in unterschiedlichster Weise variiert werden.

Die schematische Schnittansicht der Figur 2 verdeutlicht die Anordnung eines erfindungsgemäßen Zweigkanals 40, der in einem Bereich des Luftführungskanals 12 nahe der Mischungsklappe 22 angeordnet ist und durch welchen klimatisierte Luft in einen hinteren Bereich des Fahrzeuginnenraums leitbar ist. Vorzugsweise sind zu beiden Seiten der Mischungsklappe 22 Zweigkanäle 40 in symmetrischer Bauweise angeordnet, durch welche ein Teil der klimatisierten Luft in den Fondbereich des Fahrzeuginnenraums leitbar ist. Die Zweigkanäle 40 sind so platziert, dass sie unmittelbar von der Mischungsklappe 22 temperiert werden. Je nach deren Stellung strömt dann gekühlte oder erwärmte Luft in den Fahrzeugfond.

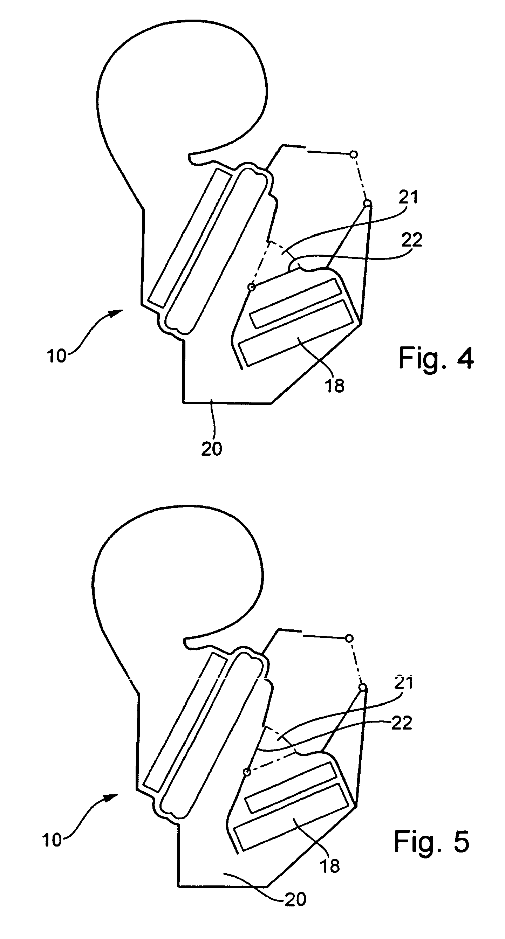

Wie anhand der Figuren 3 bis 5 verdeutlicht ist, sind zahlreiche Stellungen der Mischungsklappe 22 möglich, so dass sich die verschiedenen gewünschten Klimatisierungs- und Erwärmungsbedingungen im Fahrzeug herstellen lassen. Figur 3. zeigt eine mittlere Stellung der Mischungsklappe 22, bei der die Fondsitze sowie der vordere Bereich des Fahrzeuginnenraums mit temperierter Luft beaufschlagt werden. Figur 4 zeigt eine Anschlagstellung der Mischungsklappe 22, bei welcher der Teilkanal 20 mit der darin angeordneten Heizeinrichtung 18 verschlossen und nur der Bypasskanal 21 geöffnet ist, so dass der Fond mit gekühlter Luft beaufschlagt wird. Figur 5 zeigt eine weitere Anschlagstellung der Mischungsklappe 22, bei welcher der Teilkanal 20 mit der darin angeordneten Heizeinrichtung 18 geöffnet und der Bypasskanal 21 verschlossen ist, so dass der Fond mit erwärmter Luft beaufschlagt wird.

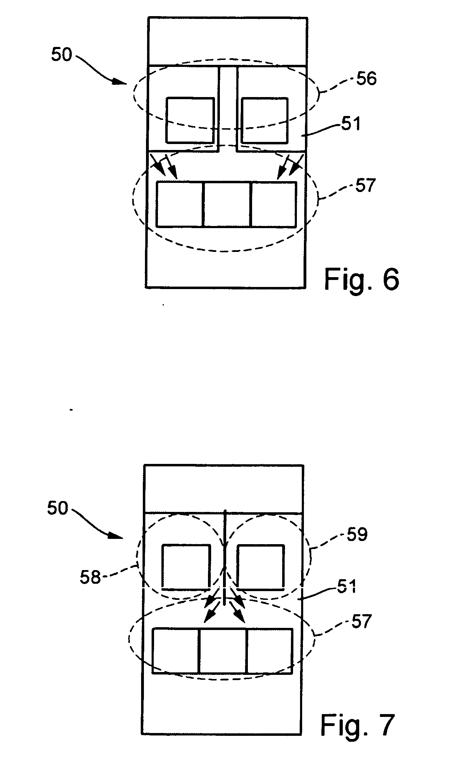

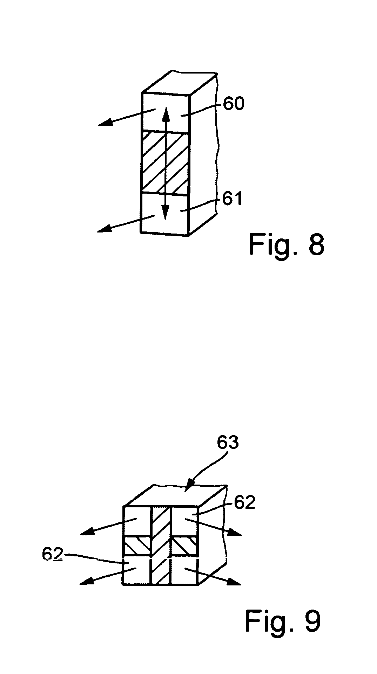

Figur 6 verdeutlicht in schematischer Darstellung einen Fahrzeuginnenraum 51, bei dem eine Klimatisierung eines vorderen Bereichs 50 sowie eines Fondbereichs 55 mit Hilfe einer Klimatisierungsvorrichtung 10 entsprechend der zuvor beschriebenen Ausführungsform ermöglicht ist. Es werden dabei zwei Klimazonen gebildet, nämlich eine vordere Klimazone 56 und eine hintere Klimazone 57. Die klimatisierte Luft für die hintere Klimazone 57 wird im gezeigten Ausführungsbeispiel zu seitlichen Ausströmöffnungen im Bereich der B-Säulen der Fahrzeugkarosserie gefördert (vgl. Figur 8).

Figur 7 verdeutlicht in schematischer Darstellung einen Fahrzeuginnenraum 51, bei dem jeweils eine getrennte Klimatisierung eines linken vorderen Bereichs, eines rechten vorderen Bereichs sowie des Fondbereichs 55 ermöglicht ist. Es werden dabei wenigstens drei Klimazonen gebildet, nämlich die beiden vorderen Klimazone 58 und 59 für die linke bzw. die rechte Seite des vorderen Bereichs 50 und die hintere Klimazone 57. Die klimatisierte Luft für die hintere Klimazone 57 wird im gezeigten Ausführungsbeispiel zu mittig angeordneten Ausströmöffnungen im Bereich eines Mitteltunnels der Fahrzeugkarosserie gefördert (vgl. Figur 9).

Die Figuren 8 und 9 verdeutlichen in schematischen Darstellungen mögliche Ausgestaltungen von Ausströmöffnungen für die hintere Klimazone 57. Die Anordnung gemäß Figur 8 sieht Ausströmöffnungen 60 und 61 im Bereich der B-Säule der Fahrzeugkarosserie vor, die jeweils in unterschiedlichen Höhen angeordnet sind.
Die höher angeordnete obere Ausströmöffnung 60 kann vorzugsweise zur Zufuhr von kälterer Luft in die hintere Klimazone 57 dienen, während die tiefer angeordnete untere Ausströmöffnung 61 vorzugsweise zur Warmluftzufuhr dient.

Wahlweise kann es auch ausreichen, jeweils nur eine Ausströmöffnung für den Fondbereich vorzusehen. Gleichartige oder ähnliche Anordnungen können jeweils in der linken und rechten B-Säule und/oder in einer linken und rechten C-Säule des Fahrzeugs vorgesehen sein.

Die Anordnung gemäß Figur 9 weist mittlere Ausströmöffnungen 62 auf, die sich bspw. im Bereich eines Mitteltunnels 63 der Fahrzeugkarosserie unterbringen lassen. Auch hier können wahlweise eine, zwei oder mehr Ausströmöffnungen 62 für die hintere Klimazone 57 vorgesehen sein, ggf. auch in unterschiedlichen Höhen.

Alle gezeigten Varianten der Klimatisierungsvorrichtung 10 weisen ein sehr kompaktes Gehäusedesign auf und ermöglichen es, die Luftverteilung auf mehrere Ausströmöffnungen mittels weniger Luftverteilungsklappen oder gar nur einer Klappe in gewünschter Weise zu steuern. Wahlweise lassen sich die Zweigkanäle 40 verschließen oder in ihrem Querschnitt reduzieren, so dass die Klimatisierung des Fondbereichs je nach Bedarf gesteuert werden kann.

## Patentansprüche

1. Klimatisierungsvorrichtung zur Klimatisierung eines Kraftfahrzeuginnenraumes (51), mit einem Luftführungskanal (12) und einer darin angeordneten Kühleinrichtung (14) sowie einer stromabwärts der Kühleinrichtung (14) in einem Teilkanal (20) angeordneten Heizeinrichtung (18), und mit einem parallel zum Teilkanal (20) verlaufenden Bypasskanal (21), wobei die Luftverteilung zwischen dem Teilkanal (20) und dem Bypasskanal (21) mittels wenigstens einer Mischungsklappe (22) variabel einstellbar ist, **dadurch gekennzeichnet, dass** nahe der Mischungsklappe (22) zu beiden Seiten der Mischungsklappe (22) in symmetrischer Bauweise am Luftführungskanal (12) jeweils ein Zweigkanal (40) angeordnet ist, durch welchen ein Teil der klimatisierten Luft in den Fondbereich (55) des Fahrzeuginnenraums (51) leitbar ist.

2. Klimatisierungsvorrichtung nach Anspruch 1, **dadurch gekennzeichnet, dass** wenigstens ein Zweigkanal (40) in einer oder mehreren Ausströmöffnungen (60, 61, 62) für den Fondbereich (55) des Fahrzeuginnenraums (51) mündet.

3. Klimatisierungsvorrichtung nach Anspruch 1 oder 2, **dadurch gekennzeichnet**, die Zweigkanäle (40) in einer oder mehreren Ausströmöffnungen (60, 61, 62) für den seitlichen Fondbereich (55) des Fahrzeuginnenraums (51) münden.

4. Klimatisierungsvorrichtung nach einem der voranstehenden Ansprüche, **dadurch gekennzeichnet, dass** wenigstens ein Zweigkanal (40) und/oder die Ausströmöffnungen (60, 61, 62) für den Fondbereich (55) variabel öffenbar bzw. verschließbar sind.

5. Fahrzeug mit einer Klimatisierungsvorrichtung nach einem der Ansprüche 1 bis 4.

6. Fahrzeug mit einer Klimatisierungsvorrichtung nach einem der Ansprüche 2 bis 4, **dadurch gekennzeichnet, dass** die Ausströmöffnungen (60, 61) jeweils im Bereich der B-Säulen der Fahrzeugkarosserie angeordnet sind.

7. Fahrzeug mit einer Klimatisierungsvorrichtung nach einem der Ansprüche 2 bis 4, **dadurch gekennzeichnet, dass** die Ausströmöffnungen (60, 61) jeweils im Bereich der C-Säulen der Fahrzeugkarosserie angeordnet sind.

8. Fahrzeug mit einer Klimatisierungsvorrichtung nach einem der Ansprüche 2 bis 4, **dadurch gekennzeichnet, dass** die wenigstens eine Ausströmöffnung (62) im Bereich eines Mitteltunnels (63) im Bodenbereich der Fahrzeugkarosserie angeordnet sind.

9. Fahrzeug nach einem der Ansprüche 6 bis 8, **dadurch gekennzeichnet, dass** mehrere Ausströmöffnungen (60, 61, 62) für den Fondbereich (55) vorgesehen sind, die jeweils in unterschiedlichen Höhen angeordnet sind.

## Claims

1. Air conditioning device for air conditioning the passenger compartment (51) of a motor vehicle, having an air duct (12), a cooling device (14) positioned in said air duct (12) and a heating device (18) positioned downstream of the cooling device (14) in a section (20) of the air duct (12), and having a bypass duct (21) running parallel to the duct section (20), it being possible to adjust the distribution of air between the duct section (20) and the bypass channel (21) variably by means of at least one mixer valve (22),
**characterised in that**
positioned in a symmetrical construction in the air duct (12) close to and on either side of the mixer valve (22) is a branch duct (40) through which it is possible to direct part of the air-conditioned air into the rear area (55) of the passenger compartment (51) of the vehicle.

2. Air conditioning device in accordance with claim 1,
**characterised in that**
at least one branch duct (40) flows into one or more outlet openings (60, 61, 62) for the rear area (55) of the passenger compartment (51) of the vehicle.

3. Air conditioning device in accordance with claim 1 or 2,
**characterised in that**
the branch ducts (40) flow into one or more outlet openings (60, 61, 62) for the sides of the rear area (55) of the passenger compartment (51) of the vehicle.

4. Air conditioning device in accordance with one of the preceding claims,
**characterised in that**
it is possible to open/close variably at least one branch duct (40) and/or the outlet openings (60, 61, 62) for the rear area (55) of the passenger compartment (51).

5. Vehicle with an air conditioning device in accordance with one of claims 1 to 4.

6. Vehicle with an air conditioning device in accordance with one of claims 2 to 4,
**characterised in that**
the outlet openings (60, 61) are positioned in the area of the B-pillars of the vehicle body.

7. Vehicle with an air conditioning device in accordance with one of claims 2 to 4,
**characterised in that**
the outlet openings (60, 61) are positioned in the area of the C-pillars of the vehicle body.

8. Vehicle with an air conditioning device in accordance with one of claims 2 to 4,
**characterised in that**
the at least one outlet opening (60, 61) is positioned in the area of a centre tunnel (63) of the vehicle body.

9. Vehicle in accordance with one of claims 6 to 8,
**characterised in that**
several outlet openings (60, 61, 62) are provided for the rear area (55) and positioned at different heights.

## Revendications

1. Dispositif de climatisation servant à la climatisation de l'habitacle (51) d'un véhicule automobile, comprenant un conduit de guidage d'air (12) et un dispositif de refroidissement (14) disposé dans le conduit de guidage d'air, ainsi qu'un dispositif de chauffage (18) disposé dans un conduit partiel (20), en aval du dispositif de refroidissement (14), et un conduit de dérivation (21) s'étendant parallèlement au conduit partiel (20), où la répartition d'air entre le conduit partiel (20) et le conduit de dérivation (21) est réglable de façon variable, au moyen d'au moins un volet mélangeur (22), **caractérisé en ce qu'**un conduit secondaire (40) est disposé à chaque fois sur le conduit de guidage d'air (12), de façon symétrique, à proximité du volet mélangeur (22), des deux côtés du volet mélangeur (22), conduit secondaire à travers lequel une partie de l'air climatisé peut être dirigée dans le secteur arrière (55) de l'habitacle (51) du véhicule.

2. Dispositif de climatisation selon la revendication 1, **caractérisé en ce qu'**au moins un conduit secondaire (40) débouche dans une ou plusieurs ouvertures de sortie (60, 61, 62) prévues pour le secteur arrière (55) de l'habitacle (51) du véhicule.

3. Dispositif de climatisation selon la revendication 1 ou 2, **caractérisé en ce que** les conduits secondaires (40) débouchent dans une ou plusieurs ouvertures de sortie (60, 61, 62) prévues pour le secteur arrière latéral (55) de l'habitacle (51) du véhicule.

4. Dispositif de climatisation selon l'une quelconque des revendications précédentes, **caractérisé en ce qu'**au moins un conduit secondaire (40) et / ou les ouvertures de sortie (60, 61, 62) prévues pour le secteur arrière (55) peuvent être ouverts ou fermés de façon variable.

5. Véhicule comprenant un dispositif de climatisation selon l'une quelconque des revendications 1 à 4.

6. Véhicule comprenant un dispositif de climatisation selon l'une quelconque des revendications 2 à 4, **caractérisé en ce que** les ouvertures de sortie (60, 61) sont disposées, à chaque fois, dans la zone des montants B de la carrosserie du véhicule.

7. Véhicule comprenant un dispositif de climatisation selon l'une quelconque des revendications 2 à 4, **caractérisé en ce que** les ouvertures de sortie (60, 61) sont disposées, à chaque fois, dans la zone des montants C de la carrosserie du véhicule.

8. Véhicule comprenant un dispositif de climatisation selon l'une quelconque des revendications 2 à 4, **caractérisé en ce que** l'ouverture de sortie (62) au moins au nombre de un, dans la zone d'un tunnel central (63), est disposée dans la zone du plancher de la carrosserie du véhicule.

9. Véhicule selon l'une quelconque des revendications 6 à 8, **caractérisé en ce qu'**il est prévu, pour le secteur arrière (55), plusieurs ouvertures de sortie (60, 61, 62) qui sont disposées à chaque fois à des hauteurs différentes.
